# EUROPEAN PATENT APPLICATION

(11) **EP 0 989 661 A2**
(43) Date of publication of application: **29.03.2000**
(21) Application number: 99500169.0
(22) Date of filing: 21.09.1999
(51) Int. Cl.: H02M 3/335

(54) **Bidirectional DC/DC converter**

(30) Priority: 21.09.1998 ES 9801976
(71) Applicant: Computadoras, Redes e Ingenieria, S.A. (Crisa), 28760 Tres Cantos, Madrid (ES)
(72) Inventor: Helsted Pedersen, Fleming, 28791 Soto del Real (Madrid) (ES)
(74) Representative: Davila Baz, Angel

(57) **Abstract**

A bidirectional DC/DC converter consisting of a transformer, current switches an a driver oscillator.

The windings (2 and 3) of the primary of the transformer are arranged in symetrical positions over the core and are connected in parallel to a couple of transitors and a capacitor (Q3B,Q4B, C4B, and Q3A, Q4A,C4A) creating resonant elements in which the on time/gap-time resonance is equal in all of them.

The winding or windings (4) of the secondary are arranged all around the core of the transformer and are connected in parallel to a couple oftransitors and a capacitor (Q5,Q6, C%) creating resonant elements equal to those of the windings of the primary.

## Description

The present invention concerns an electrical power bidirectional DC/DC converter comprising a transformer, current switches and an oscillator; the primary and the secondary of the transformer consisting of one or several windings.

-A converter of the stated type is described in the following French patents nr. 2658.674, 2627.644 and 2.720.567.

The present invention concerns a converter of the same type in whcih, by means of a special design, it is possible to reduce substantially the volume of the unit, within a reasonable geometry or location.

Another object of the invention is to provide a converter of the stated type which is bidirectional and works on a high-level performance in discharge as well as in charge.

The converter of the invention is characterized by the fact that the windings comprising the primary of the transformer, two windings or more, are arranged in symetrical positions over the core, while every single winding comprising the secondary, is arranged all around the core describing a large number of turns around the core to provide the necessry transformation, displaying those turns along the whole core to provide the same coupling with the different windings of the primary.

All the windings of the primary as well as those of the secondary are connected in parallel to a couple of transistors and a capacitor composing resonant elements in which the on-time resonance, produced between the leakage inductance of the transformer and the capacitor of each resonant element is equal in all the resonant elements; equal as well is the gap-time resonance produced between the output of the transitors of every single resonant element and the main inductance of the transformer.

Preferably the core will be toroidal, the windings of the primary being arranged symetrically over it, coupled in parallel.
The windings of the secondary with a larger number of turns are wound around the whole circumference of the core to provide the same coupling with the windings of the primary.

The oscillator used in the converter of the invention comprises a transformer and a switching transistor; the windings which form the secondary of the stated transformer being directly connected to the transistor gates of the resonant elements.
Finally the oscillator comprises a control loop regulating the amplitude of the sinusoidal voltage used to control the transitors of the resonant elements.

The converter of the invention also comprises potentionmeters connected between the return of the transitors of the resonant elements and a negative voltage, generated by the oscillator, to allow the on-time / gap-time individual tunning of the resonant elements of the primary and secondary.

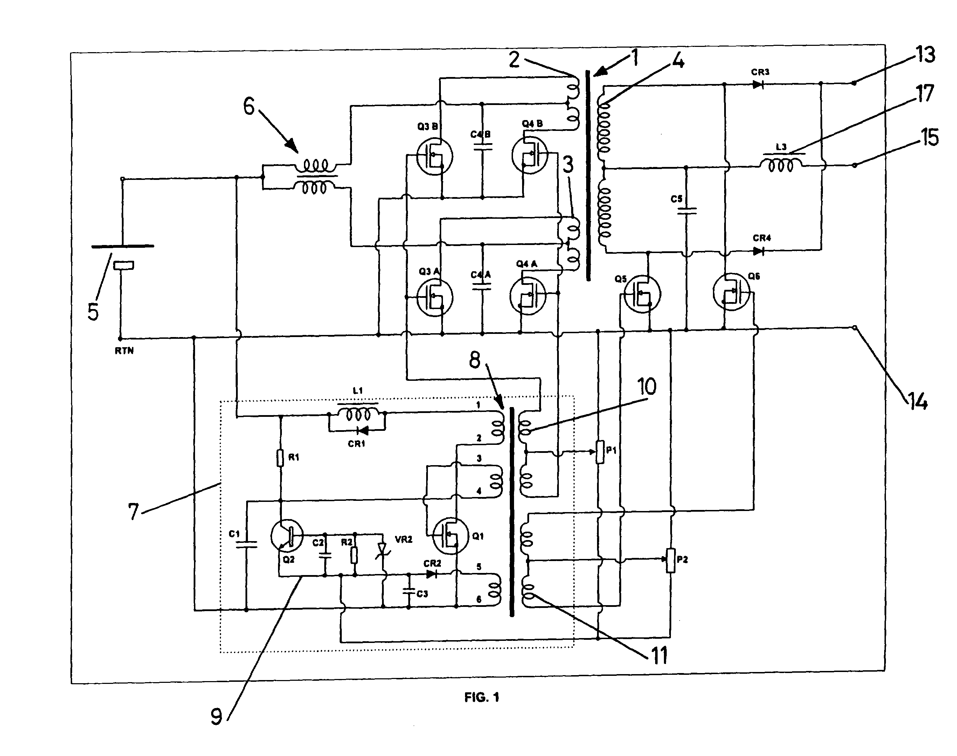

All the characteristics of the invention as well as other properties of the invention will be explained more fully by the following description of some implementations with reference to the drawing, in which fig. 1. is a circuit diagram of a bidirectional power converter designed according to the invention.

Fig.2. is a sketch of the transformer used in fig. 1. Xs circuit diagram, in charge mode, showing a preferred design of the transformer's core.

Fig. 3. shows the same sketch as in fig.2 but in discharge mode.

Fig. 1. shows the circuit diagram of a bidirectional DC/DC converter designed according to the invention, which comprises a transformer (1) in which the primary, in that case consists of windings referred to as (2) and (3) while the secondary consists of one single winding (4) with a larger number of turns in order to provided the necessary transformation.

Windings 2 and 3 forming the primary are connected in parallel to a couple oftransitors and a capacitor.
The transitors and the capacitor connected to windings 2 and 3 of the primary are symbolically indicated by Q3B, Q4B,C4A and Q3A,Q4A, C4B, while the transitors and the capacitor connected to winding 4 of the secondary are symbolically indicated by Q5, Q6 and C5.
The source voltage of windings 2 and 3 starts from the battery 85) driven through correspondent equal coils (6).
All the windings of the transformer (1), together with the transitors and the capacitor herewith connected form the resonant elements in which the on-time resonance produced between the leakage inductance of transformer 1 and the capacitor of each resonant element is equal in all the resonant elements; equal as well is the gap-time resonance between the output capacitance of the transitors of every single resonant element and the main inductance of the transformer.

The converter of the invention consists of a driver oscillator, referred tp as number 7, which includes a transformer (8) the core of which works in resonance with the input capcitance of the power switching transistors.
The oscillator also includes a small power Mosfet switching transistor referred to as Q1.

The oscillator also includes a control loop (9) regulating the amplitude of the sinusoidal voltage used to control the transistors of the resonant elements; the control loop consisting of the transistor Q2, the capacitors C!, C2, and C3, the resistors R1/R2, the diode VR2, the diode CR2, all of them connected to one of the windings of the primary of transformer 8. The source voltage of transformer 8 takes place through the coil L1.
The secondary oftransformer 8 consists oftwo windings (10) and (11) connected directly to the transistor gates of the resonant elements.
Finally the converter of the invention comprises two potentiometers P1 and P2 connected between the return of the transistors of the resonant elements and a negative voltage delivered by the driver oscillator 7 to allow the on-time /gap-time individual running of the resonant elements of the primary and secondary of transformer 1.

The sketch of the invention shows the operation in discharge obtained between terminals 13 and 14 and terminals 14 and 15 form battery 5 using terminals 13 and 14 only when twice as much voltage is required, while the operation in charge is obtained between terminals 14 and 15.

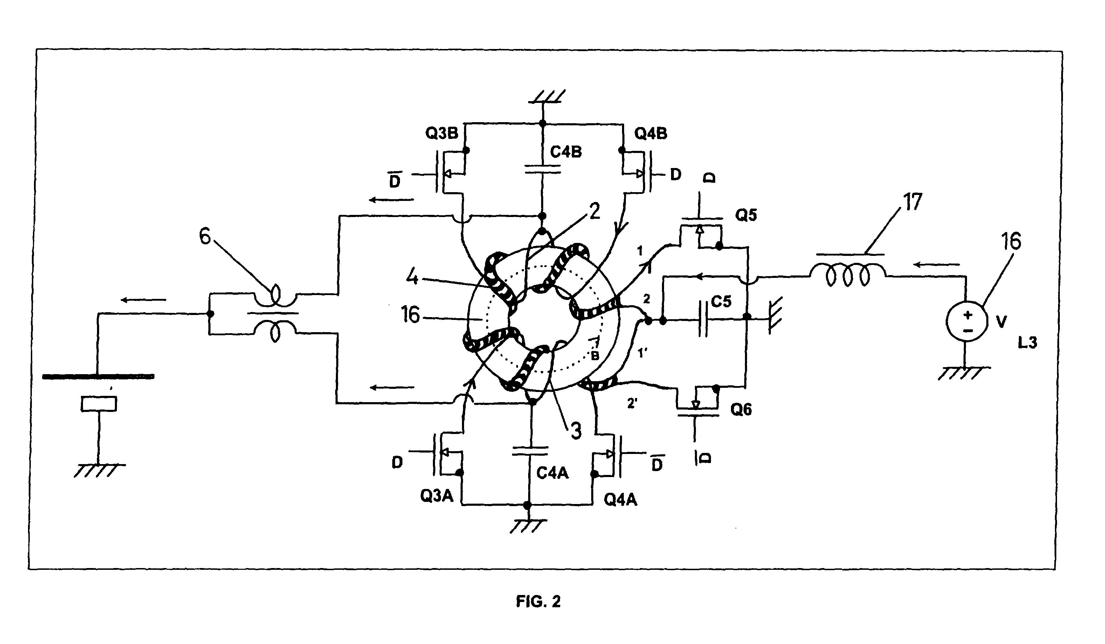

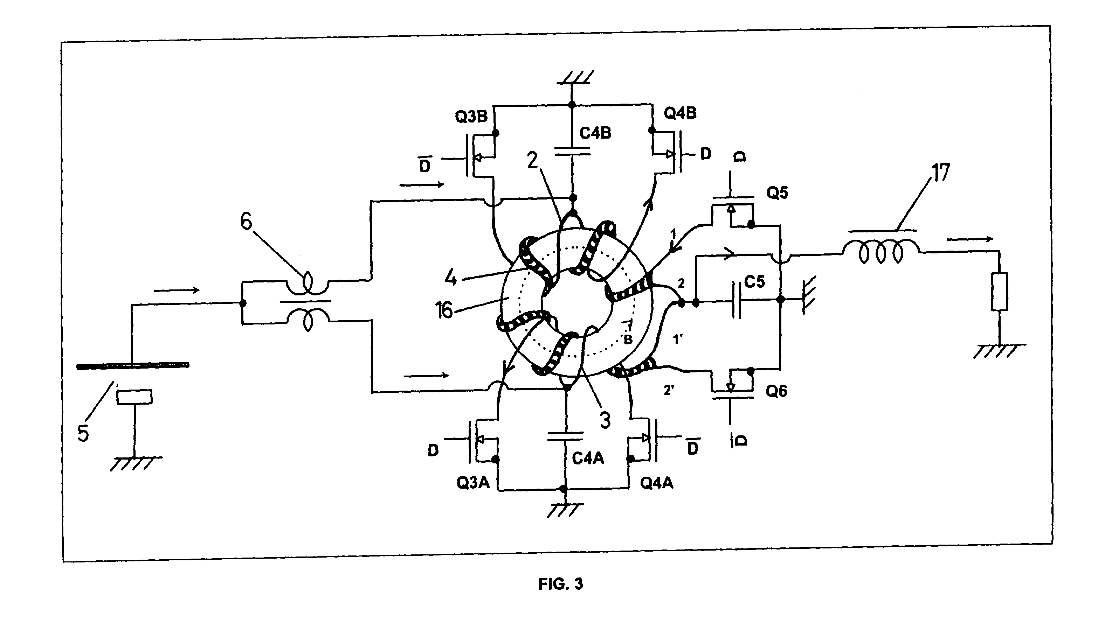

Fig. 2 and 3 show a preferred implementation of the core of transformer 1 with the display of the different windings of the first and secondary.

The core (16) belonging to transformer 1 in Fig. 1 circuit diagram, is of toroidal design and supports two primary windings (2 and 3), placed symetrically over the core. Windings 2 and 3 are connected respectively to the transitors Q3B and Q4B as wlell as to the capacitor C4B: hereby resonating elements are defined.

The secondary 4 is wound along the total circumference of the toroid with a larger nimber of turns, in order to obtain the necessary transformation and in order to obtain the same coupling with the primary windings 2 and 3.

In Fig. 2 and 3 the direction of the current flow is indicated by use of arrows.
Fig.2 shows the case when the battery 5 is charged from a power supply 16 connected to terminals 14 and 15 shown in Fig. 1, while Fig. 3 shows the current flow when the converter discharges the battery 5 to a load placed between terminals 14 and 15 shown in Fig. 1.

The coil through which the current flows during charge and discharge is indicated by number 17.
The power Mosfet transistors connected to the primary windings 2 and 3 work in discharge (fig.3) as two resonant push-pull stages while in charge (Fig.2) they work as resonant synchroneous rectifiers.

On the other hand, the transistors conneted to the secondary (4) work in discharge as resonant synchroneous rectifiers and in charge as resonant push-pull stage.
The discharge operation takes place either through the rectifyng diodes CR 3 and CR 4 shown in Fig. 1 which allows to double the output voltage, or through coil 17.

By coupling the diffrerent pairs of transistors conneted to the windings of the primary with the same constant current supplying coil 6, you can obtain a better sharing of the current flow between the push-pull stages.

In Figures 2 and 3, the connection between the resonating elements and Fig. 1's driver oscillator (7) is referred to as D.
Even if in the shown example, the transformer (1) of the primary only includes two windings, the number of windings can be increased, placed in symetrical positions to one another.
The secondary will also be able to include two or more windings, all of them placed in parallel around the core (16).

According to the physical process which allows to place several synchroneous rectifiers, resonating in parallel, displayed around the transformer, you can obtain an individual tuning . By increasing the number of transistorpairs you can obtain low losses on the side of the primary.

In the transformer of the invention, the biridectional power transfer has a very high efficiency; It is obtained by the symetrical design of the converter, where you can use the same circuit both as syncroneous rectifier or as push/pull stage depending on the energy flow.

The direction of the energy flow only depends on the sources/charges connected to the converter.

In that way, the converter of the invention allows an individual tuning of the on time and gap-time for both sides of the converter due to the use of the potentiometers P1 and P2.

## Claims

1. A bidirectional DC/DC converter which consists of a transformer (19, current switches and a driver oscillator (7); the primary and the secondary of the transformer (1) being composed by one or several windings (2,3) characterized in that the diferent windings (2,3) composing the primary of the transformer (1) are arranged in symetrical positions over the core and connected in parallel to a couple of transistors (Q3B, Q4B and Q3A, Q4A) and a capacitor (C4B and C4A) creating resonant elements in which the on-time resonance produced between the leakage inductance of the transformer (1) and the capacitor (C4B,C4A) of each resonant element is equal in all the resonant elements, equal as well is the gap-time resonance produced between the output capacitance of the transistors (Q3B,Q4B,Q3A,Q4A) of every single resonant element and the main inductance of the transformer (1); while the winding or windings (4) composing the secondary is or arranged all around the core of the transformer (1), describing a large number of turns than the number of turns of the primary in order to provide the necessary transformation (1), displaying those turns along the whole core to provide the same coupling with the different windings (2,3) of the primary. Moreover the windings (4) of the secondary are connected in paralell to a couple of transistors (Q5, Q6) and to a capacitor (C5), creating resonant elements identical to those of the windings (2,3) of the primary.

2. A power converter ,according to claim 1, characterized in that the core of the transformer (1) is a toroidal design, the resonant elements placed symetrically around that core being couple in parallel.

3. A power converter, according to claim 1, which oscilator includes a transformer (8) and a switching transistor (Q1) characterized in that the windings (10,11) which compose the secondary of the said transformer (8) are directly connected to the transistor gates (Q3B, Q4b, Q4A, Q5, Q6) of the resonant elements; characterized too by the fact that the referred oscillator includes a control loop (9) controlling the sinusoidal voltage amplitude necessary to control the transistors (Q3B,Q4B,Q3A,Q4Q,Q5,Q6) of the resonant elements.

4. A power converter according to claims 1 and 3 characterized in that it includes potentiometers (P1 and P2) conneted between the return of the transistors of the resonant elements and a negative voltage generated the oscilator (7) in order to allow the individual tuning of the on-time/gap-time of the resonant elements of the primary and secondary.
